# EUROPÄISCHE PATENTANMELDUNG

(11) **EP 1 022 584 A2**
(43) Veröffentlichungstag der Anmeldung: **26.07.2000**
(21) Anmeldenummer: 99124691.9
(22) Anmeldetag: 11.12.1999
(51) Int. Cl.: G01S 17/08

(54) **Optoelektronischer Mischer**

(30) Priorität: 23.01.1999 DE 19902612
(71) Anmelder: Carl Zeiss, 89518 Heidenheim (Brenz) (DE); CARL-ZEISS-STIFTUNG, trading as CARL ZEISS, 89518 Heidenheim (DE)
(72) Erfinder: Knupfer, Klaus, Dr.-Ing, 73457 Essingen (DE)

(57) **Zusammenfassung**

Ein optoelektronischer Mischer zur Demodulation eines mit einer Signalfrequenz (f_{sig}) hochfrequent amplitudenmodulierten Lichtsignals (21) umfaßt einen das Lichtsignal (21) in freie Ladungsträger umwandelnden Lichtsensor (2) und einen mit dem Lichtsensor (2) verbundenen Referenzfrequenzgenerator (29) zum Anlegen einer Wechselspannung mit einer Referenzfrequenz (f_{ref}) an den Lichtsensor (2). Dabei weist der Lichtsensor (2) mindestens zwei individuell ansteuerbare Sensorelektroden (5, 7) auf, wobei der Referenzfrequenzgenerator mit beiden Sensorelektroden (5, 7) verbunden ist, um die im Takt der Signalfrequenz (f_{sig}) vom Lichtsignal (21) erzeugten Ladungsträger im Takt der Referenzfrequenz (f_{ref}) abwechselnd zu der einen Sensorelektrode (5) oder der anderen Sensorelektrode (7) zu leiten.

## Beschreibung

Die Erfindung betrifft einen optoelektronischen Mischer nach dem Oberbegriff von Anspruch 1 und ein Entfernungsmeßgerät nach Anspruch 10.

Ein gattungsgemäßer optoelektronischer Mischer bzw. Demodulator ist aus der DE 196 43 287 A1 bekannt. Bei diesem bekannten Mischer wandelt eine Avalanche-Fotodiode (AFD) ein hochfrequent amplitudenmoduliertes Lichtsignal in freie Ladungsträger um. Dabei ist die AFD mit einem Referenzfrequenzgenerator verbunden, um das hochfrequente Lichtsignal mit einer geeigneten Mischer- bzw. Referenzfrequenz in einen niederen Frequenzbereich umzusetzen.

Die bei diesem bekannten optoelektronischen Mischer als Lichtsensor dienende AFD muß über eine Hochspannung in Sperrichtung vorgespannt werden, hat ein über das Photonenrauschen des Lichtsignals hinausgehendes Eigenrauschen und einen zwar hohen, aber empfindlich von Hochspannung und Temperatur abhängigen Verstärkungsgrad. Deshalb ist eine relativ aufwendige Kalibrierungseinrichtung erforderlich, wenn der bekannte Mischer, wie in der DE 196 43 287 A1 beschrieben, in einem Entfernungsmeßgerät eingesetzt wird.

Bei dem aus der US 5,721,424 bekannten elektrooptischen Mischer mit einer AFD als Lichtsensor beeinträchtigen Temperaturabhängigkeit, nichtlineare AFD-Kennlinie und Eigenrauschen der AFD die Mischeffizenz erheblich.

Aufgabe der Erfindung ist es deshalb, einen optoelektronischen Mischer bereitzustellen, welcher bei geringem Schaltungs- und Bauaufwand eine gute Mischeffizienz bietet.

Erfindungsgemäß wird diese Aufgabe durch die Merkmale im Anspruch 1 gelöst. Denn an die mindestens zwei individuell ansteuerbaren Sensorelektroden des Lichtsensors kann der Referenzfrequenzgenerator komplementäre Wechselspannungen anlegen, wodurch die im Amplitudenmodulationstakt auf dem Lichtsensor erzeugten Ladungsträger im Referenzfrequenztakt abwechselnd zu der einen oder der anderen der beiden Sensorelektroden geleitet werden. Dies ist ein multiplikativer Mischvorgang, der, anders als bei einer AFD als Lichtsensor, nicht mit einem nennenswerten Eigenrauschen behaftet sein muß.

Nach einer vorteilhaften Ausführungsform der Erfindung ist der Lichtsensor eine Multisegment-Fotodiode mit einer Mehrzahl voneinander in Abstand angeordneter, individuell kontaktierter Segmente, wobei die mindestens zwei individuell ansteuerbaren Elektroden von zwei Segmenten gebildet werden. Die einfachste Multisegment-Fotodiode ist eine Differenzdiode mit zwei auf einem monolithischen Halbleiterkristall angeordneten, durch einen Spalt von einigen µm bis einigen 10 µm getrennten Segmenten. Diese Segmente, d.h. niederohmigen, transparenten Flächen, sammeln alle in dem betreffenden Segment erzeugten Ladungsträger und leiten sie über die Kontaktierung der Segmente als detektierbaren elektrischen Strom ab. Durch die Erfindung kann ein optoelektronischer Mischer bzw. Modulator mit den in großer Stückzahl und Vielfalt erhältlichen, im Betrieb relativ unkritischen Differenz- oder auch Quatrantendioden gebaut werden. Da Multisegment-Fotodioden zudem bereits bei geringer Vorspannung, z.B. 5V, effektive Lichtsensoren sind, kann der Schaltungsaufwand des erfindungsgemäßen Mischers im Vergleich zum Stand der Technik erheblich reduziert werden.

Die Anmelderin hat überraschenderweise festgestellt, daß der Mischvorgang nur im Bereich zwischen den Segmenten einer Multisegment-Fotodiode stattfindet. Deshalb ergibt sich eine besonders hohe Mischeffizienz, wenn eine optische Abbildungseinrichtung das Lichtsignal in einen zwischen zwei Segmenten einer Multisegment-Fotodiode liegenden Bereich abbildet und die beiden Sensorelektroden von den diesem Bereich benachbarten Segmente gebildet sind. Dabei wird das in die Lücke bzw. den Bereich zwischen den Segmenten einer Multisegment-Fotodiode fallende Licht des Lichtsignals, entgegen einem weit verbreiteten Vorurteil, in Ladungsträger umgewandelt. Diese in der Lücke erzeugten und für die meisten Anwendungsfälle vernachlässigbaren Photoelektronen bzw. Löcher wandern zu den beiden benachbarten Segmenten. Falls die beiden Segmente dem üblichen Anwendungsfall einer Multisegment-Fotodiode entsprechend auf gleicher Sperrspannung liegen, verteilen sich die in der Lücke erzeugten Ladungsträger auf die beiden benachbarten Segmente, wobei das Aufteilungsverhältnis von der Lage des Lichtflecks in der Lücke abhängen dürfte. Legt man nun zwei benachbarte Segmente auf unterschiedlich hohe Sperrspannungen, so wandern die in der Lücke erzeugten Elektronen (Löcher) bevorzugt zur positiveren (negativeren) Elektrode.

Bei einer weiteren Ausführungsform sind die einzelnen Segmente der Multisegment-Fotodiode lichtundurchlässig abgedeckt. Dadurch wird das Umgebungslicht, das zu zusätzlichem Photonenrauschen und zu Übersteuerung führen kann, stark abgeschwächt.

Überraschenderweise hat die Anmelderin also festgestellt, daß die Elektroden, an denen die Referenzfrequenz angelegt wird, nicht selbst zur Umwandlung von Licht in Ladungsträger beitragen sollten, und daß bei einer Multisegment-Fotodiode als Lichtsensor gerade der gemeinhin als vernachlässigbar geltende Lückenbereich zwischen den Segmenten für die Funktion als optoelektronischer Mischer wesentlich ist, wobei die Lichtsensitivität der Segmente selbst möglichst vollständig zu unterdrücken ist.

Falls der Lichtsensor mit einem an den Wellenlängenbereich der Lichtsignalträgerwelle angepaßten Spektralfilter beschichtet ist, können Störlichtquellen noch wirkungsvoller unterdrückt werden. In diesem Zusammenhang wird darauf hingewiesen, daß unter "Licht" im Sinne dieser Anmeldung jeder Signalträger zu verstehen ist, für den es geeignete Sensoren gibt. Diese Erfindung ist also keinesfalls auf den Spektralbereich des sichtbaren Lichts beschränkt.

Bei einer weiteren Ausführungsform ist der Referenzfrequenzgenerator über sehr kleine Kapazitäten mit den Sensorelektroden verbunden. Insbesondere bei Multisegment-Fotodioden als Lichtsensor läßt sich dadurch die Referenzfrequenz effektiv und stromsparend in den Lichtsensor einkoppeln.

Gemäß einer weiteren vorteilhaften Ausführungsform sind die Segmente einer Multisegment-Fotodiode über hochohmige Widerstände in Sperrichtung vorgespannt. Denn bei einer niedrigen Mischfrequenz, die bei einem geringen Frequenzabstand von Signalfrequenz und Referenzfrequenz entsteht, können die Spannungssignale dann durch die entsprechend hochohmigen Verstärkerschaltungen sehr effizient und rauscharm ausgewertet werden.

Wenn zum Puffern und Tiefpaßfiltern der von den Sensorelektroden kommenden Spannungssignale hochohmige Verstärker zwischen die Sensorelektroden und eine Auswerteeinheit geschaltet sind, können die höherfrequenten Signale in der bewährten Weise von den zur Auswertung herangezogenen niederfrequenten Signalen separiert werden.

Nach einem weiteren Gesichtspunkt betrifft die Erfindung auch die Verwendung eines erfindungsgemäßen optoelektronischen Mischers in einem Entfemungsmeßgerät mit einem das amplitudenmodulierte Lichtsignal zu einem zu vermessenden Objekt aussendenden Lichtsender, wobei der Lichtsensor das von dem Objekt zurückkommende, reflektierte Lichtsignal erfaßt und eine Auswerteeinheit die Phasenverschiebung zwischen dem ausgesandten und dem zurückkommenden Lichtsignal bestimmt. Das dadurch geschaffene Entfernungsmeßgerät ist auch bei geringer Lichtleistung, d.h. großer Entfernung des Objekts und/oder geringem Energieverbrauch, und bei hoher Amplitudenmodulationsfrequenz, d.h. hoher Entfernungsmeßgenauigkeit, leicht auswertbar, da durch den erfindungsgemäßen optoelektronischen Mischer die Umsetzung in einen niederen Frequenzbereich an einer Stelle im Signalpfad durchgeführt wird, wo noch keine breitbandige elektrische Verstärkung erfolgt ist.

Die Erfindung wird im folgenden anhand eines Ausführungsbeispiels erläutert.

Es zeigen:
- Figur 1: eine schematische Darstellung eines erfindungsgemäßen elektrooptischen Mischers;
- Figur 2: eine Blockdarstellung eines einen erfindungsgemäßen elektrooptischen Mischer umfassenden Entfernungsmeßgeräts; und
- Figur 3: eine Blockdarstellung eines weiteren, einen erfindungsgemäßen elektrooptischen Mischer umfassenden Entfernungsmeßgeräts.

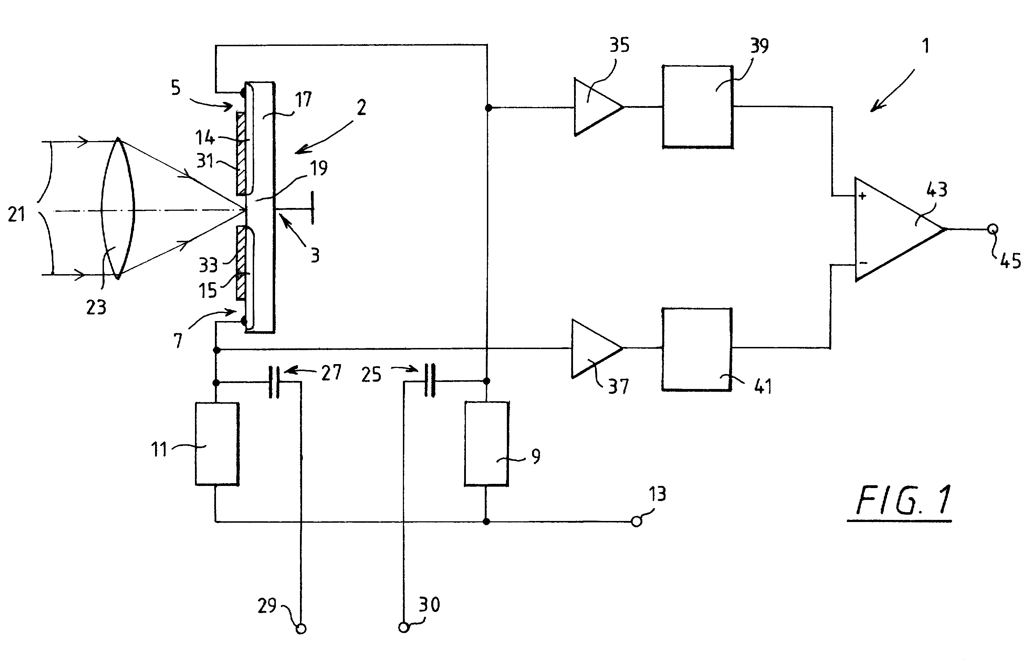

Die in Figur 1 dargestellte Ausführungsform eines erfindungsgemäßen optoelektronischen Mischers 1 weist als Lichtsensor eine als Differenzdiode 2 ausgeführte Multisegment-Fotodiode auf. Diese Differenzdiode 2 umfaßt eine auf Massepotential liegende Elektrode 3 und zwei individuell ansteuerbare Sensorelektroden 5 und 7, welche über sehr hohe (z.B. 10 MQ) Widerstände 9 und 11 und über einen Eingang 13 auf einer Sperrspannung von z.B. 5 bis 15 V liegen.

Die Sensorelektroden 5 und 7 umfassen niederohmige, transparente Segmentflächen 14 und 15. Diese auf einem monolithischen Halbleiterkristall 17 angeordneten Segmente 14 und 15 werden bei der im Stand der Technik bekannten Verwendung einer Multisegment-Fotodiode als lichtsensitive Sensorbereiche genutzt.

Erfindungsgemäß ist aber der die Segmente 14 und 15 trennende Bereich 19 der Differenzdiode 2 das lichtsensitive Sensorelement, auf welches ein Lichtsignal 21 mit Hilfe einer schematisch dargestellten Abbildungsoptik 23 abgebildet wird. Der lichtsensitive Sensorbereich 19 ist typischerweise einige µm bis einige 10 µm breit.

Von einem in Fig. 1 nicht dargestellten Referenzfrequenzgenerator werden den Sensorelektroden 5 und 7 über kleine Kapazitäten 25 und 27 (z.B. Größenordnung. 1 pF bis 10 pF) und über Referenzfrequenzeingänge 29 und 30 komplementäre Wechselspannungen mit der Referenzfrequenz f_{ref} zugeführt. Die Referenzfrequenz f_{ref} kann z.B. einige 100 MHz und die Amplitude dieser Wechselspannung einige Volt betragen, wobei sie die Vorspannung am Eingang 13 jedoch nicht übersteigt.

Die in dem lichtsensitiven Bereich 19, d.h. in der Lücke zwischen den Segmenten 14 und 15, erzeugten Photoelektronen wandern entsprechend der Referenzfrequenz f_{ref} wahlweise zur Sensorelektrode 5 oder zur Sensorelektrode 7, wodurch ein multiplikativer Mischvorgang zwischen dem mit einer Signalfrequenz f_{sig} amplitudenmodulierten Lichtsignal 21 und der Referenzfrequenz f_{ref} bewirkt wird.

Dabei hat die Anmelderin herausgefunden, daß zu diesem multiplikativen Mischvorgang nur das auf den lichtsensitiven Bereich 19 fallende Licht beiträgt. Den Segmenten 14 und 15 sind deshalb vorteilhafterweise lichtundurchlässige Abdeckschichten 31 und 33 zugeordnet.

Die an den Sensorelektroden 5 und 7 abgegriffenen Signale werden über hochohmige Verstärker 35 und 37, vorzugsweise FET-Verstärker, und diesen nachgeordnete Tiefpaßfilter 39 und 41 derart gepuffert und gefiltert, daß die Signalanteile mit der Signalfrequenz f_{sig}, mit der Referenzfrequenz f_{ref} und mit der Summenfrequenz f_{sig} + f_{ref} unterdrückt werden. Das durch Differenzbildung mit einem nachgeordneten Differenzverstärker 43 gebildete Ausgangssignal umfaßt dann im wesentlich lediglich die Differenzfrequenz f_{sig} - f_{ref}. Am Ausgang 45 kann dann das Mischsignal mit der Differenzfrequenz f_{sig} - f_{ref} zur Weiterverarbeitung abgenommen werden.

Bei diesem Ausführungsbeispiel kann bei niedriger Differenzfrequenz die Diodenbeschaltung extrem hochohmig sein, wodurch auch bei geringer Intensität des Lichtsignals 21 gut auswertbare Signale entstehen. Von der Erzeugung der Referenzfrequenz abgesehen müssen nirgendwo hochfrequente Signale verarbeitet werden, wodurch die Signalfrequenz des Lichtsignals 21 ohne höheren Auswerteaufwand sehr hoch gewählt werden kann. Da die Spannungsversorgung über den Bereich üblicher Gerätekleinspannungen (z.B. 15 V) nicht hinausgehen muß, können mit Ausnahme des Referenzfrequenzgenerators alle Komponenten sehr stromsparend ausgelegt werden.

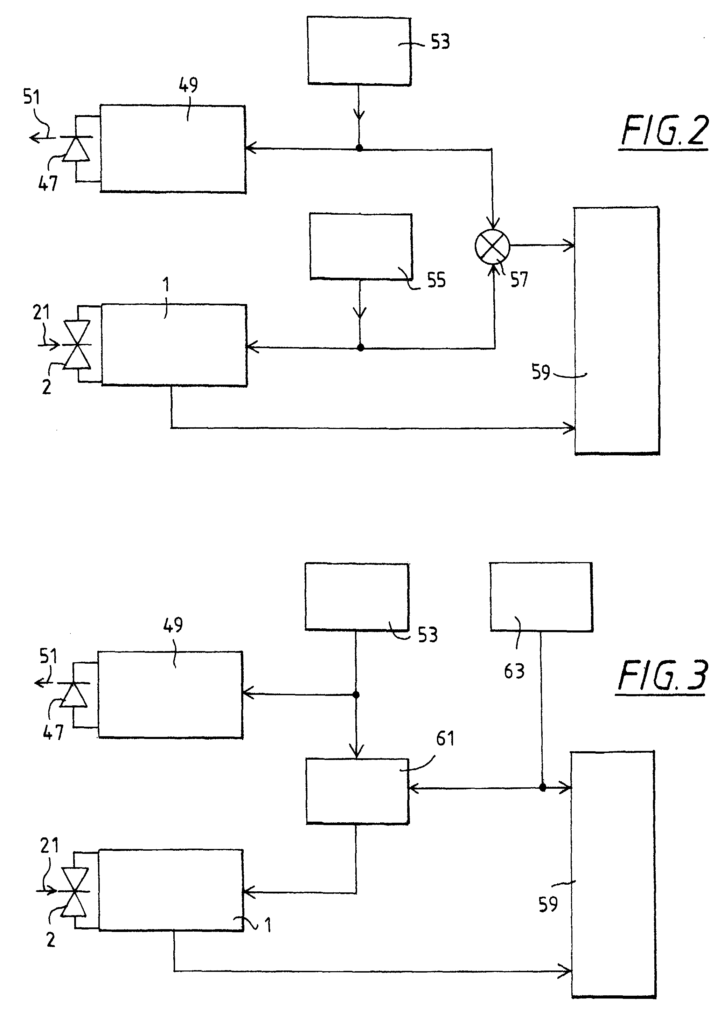

In Figur 2 ist ein den elektrooptischen Mischer 1 von Figur 1 umfassendes Entfernungsmeßgerät blockschaltbildartig dargestellt. Dabei emittiert eine Sendeeinheit 49 mit einem Diodenlaser 47 ein amplitudenmoduliertes Lichtsignal 51 zu einem zu vermessenden, nicht dargestellten Objekt. Das Lichtsignal 51 wird von diesem Objekt reflektiert und wird als Lichtsignal 21 von dem die Differenzdiode 2 umfassenden elektrooptischen Mischer 1 erfaßt.

Ein Signalfrequenzgenerator 53 erzeugt die der Amplitude des Lichtsignals 51 aufgeprägte Signalfrequenz f_{sig} und ein Referenzfrequenzgenerator 55 erzeugt die Referenzfrequenz f_{ref}, welche sich nur um einen relativ kleinen Betrag f_{NF} von der Signalfrequenz f_{sig} unterscheidet. Die Referenzfrequenz f_{ref} wird dem Demodulator bzw. elektrooptischen Mischer 1 über seine in Figur 1 dargestellten Referenzfrequenzeingänge 29 und 30 zugeführt. Die Signalfrequenz f_{sig} und die Referenzfrequenz f_{ref} werden darüber hinaus von dem Signalfrequenzgenerator 53 bzw. von dem Referenzfrequenzgenerator 55 einem weiteren Mischer 57 zugeführt. Der Mischer 57 ist ausgangsseitig mit einem Phasenvergleicher 59 verbunden, welcher ferner mit dem in Figur 1 dargestellten Ausgang 45 des elektrooptischen Mischers 1 verbunden ist, um die dem ausgesandten Lichtsignal 51 aufgeprägte Phase mit der Phasenlage des empfangenen Lichtsignals 21 vergleichen zu können, woraus dann die Entfernung des reflektierenden Objekts bestimmbar ist.

In Figur 3 ist eine weitere Ausführungsform eines den elektrooptischen Mischer 1 umfassenden Entfemungsmeßgeräts dargestellt, wobei die den Elementen von Figur 2 entsprechenden Elemente von Figur 3 die gleichen Bezugszeichen wie in Figur 2 tragen.

Im Unterschied zum Entfernungsmeßgerät nach Figur 2 wird die Referenzfrequenz f_{ref} beim Entfemungsmeßgerät nach Figur 3 nicht von einem gesonderten Referenzfrequenzgenerator erzeugt, sondern mittels eines als Einseitenbandmodulator (Single Sideband Modulator SSM) ausgebildeten Frequenzversetzers 61 aus der Signalfrequenz f_{sig} erzeugt. Dazu erzeugt ein Niederfrequenzgenerator 63 die gegenüber der Signalfrequenz f'_{sig} kleine Niederfrequenz f_{NF}, welche vom Frequenzversetzer 61 zur Signalfrequenz f'_{sig} hinzuaddiert bzw. von der Signalfrequenz f'_{sig} subtrahiert wird. Dadurch wird die Referenzfrequenz f_{ref} erzeugt und dann dem elektrooptischen Mischer 1 zuführt.

Der elektrooptische Mischer 1 erzeugt aus der dem empfangenen Lichtsignal 21 aufgeprägten Signalfrequenz f'_{sig} und der ihm über den Frequenzversetzer 61 zugeführten Referenzfrequenz f_{ref} dann wiederum ein Meßsignal mit der Niederfrequenz f_{NF}. Die Phasenlage dieses Meßsignals ist starr mit der Phasenlage des Generators 63 verkoppelt, da das Meßsignal durch zwei Mischvorgänge (zunächst im Frequenzversetzer 61, dann im Mischer 1) aus der Frequenz des Generators 63 abgeleitet ist. Das Meßsignal erfährt jedoch eine Phasenverschiebung, welche von den Laufzeiten in der Sendeeinheit 49 und im Mischer 1 sowie dem Entfernungsmeßprinzip entsprechend insbesondere vom optischen Weg herrührt, den das Sendelicht von der Sendeeinheit 49 bis zum Empfänger, d.h. zur Differenzdiode 2 zurücklegt. Diese Phasenverschiebung wird im Phasenvergleicher 59 gemessen und ist ein Maß für die Entfernung.

## Patentansprüche

1. Optoelektronischer Mischer (1) zur Demodulation eines mit einer Signalfrequenz (f_{sig}) hochfrequent amplitudenmodulierten Lichtsignals (21), umfassend einen das Lichtsignal (21) in freie Ladungsträger umwandelnden Lichtsensor (2) und einen mit dem Lichtsensor (2) verbundenen Referenzfrequenzgenerator zum Anlegen einer Wechselspannung mit einer Referenzfrequenz (f_{ref}) an den Lichtsensor (2),
dadurch gekennzeichnet, daß
der Lichtsensor (2) mindestens zwei individuell ansteuerbare Sensorelektroden (5, 7) aufweist und der Referenzfrequenzgenerator mit beiden Sensorelektroden (5, 7) verbunden ist, um die im Takt der Signalfrequenz (f_{sig}) vom Lichtsignal (21) erzeugten Ladungsträger im Takt der Referenzfrequenz (f_{ref}) abwechselnd zu der einen Sensorelektrode (5) oder der anderen Sensorelektrode (7) zu leiten.

2. Optoelektronischer Mischer nach Anspruch 1, wobei der Lichtsensor (2) eine Multisegment-Photodiode mit einer Mehrzahl voneinander in Abstand angeordneter, individuell kontaktierter Segmente (14, 15) ist, wobei die mindestens zwei individuell ansteuerbaren Sensorelektroden (5, 7) von den Segmenten (14, 15) gebildet sind.

3. Optoelektronischer Mischer nach Anspruch 2, wobei eine optische Abbildungseinrichtung (23) das Lichtsignal (21) in einen zwischen zwei Segmenten (14, 15) liegenden Bereich (19) des Lichtsensors (2) abbildet und die beiden Elektroden (5, 7) von den diesem Bereich benachbarten Segmenten (14, 15) gebildet sind.

4. Optoelektronischer Mischer nach Anspruch 3, wobei die einzelnen Segmente (14, 15) des Lichtsensors (2) von einer lichtundurchlässigen Schicht (31, 33) abgedeckt sind.

5. Optoelektronischer Mischer nach einem der Ansprüche 1-4, wobei dem Lichtsensor (2) ein auf den Wellenlängenbereich der Lichtsignalträgerwelle (21) abgestimmter Spektralfilter zugeordnet ist.

6. Optoelektronischer Mischer nach einem der Ansprüche 1-5, wobei der Referenzfrequenzgenerator über kleine Kapazitäten (25, 27) mit den Sensorelektroden (5, 7) verbunden ist.

7. Optoelektronischer Mischer nach einem der Ansprüche 2-6, wobei die Segmente (14, 15) des Lichtsensors (2) über hochohmige Widerstände (9, 11) in Sperrichtung vorgespannt sind.

8. Optoelektronischer Mischer nach einem der Ansprüche 1-7, wobei zum Puffern und Tiefpaßfiltern der von den Sensorelektroden (5, 7) kommenden Spannungssignale hochohmige Verstärker (35, 37) zwischen die Sensorelektroden (5, 7) und einen Differenzverstärker (43) geschaltet sind.

9. Optoelektronischer Mischer nach Anspruch 8, wobei Tiefpaßfilter (39, 41) zwischen die hochohmigen Verstärker (35, 37) und den Differenzverstärker (43) geschaltet sind.

10. Verwendung eines optoelektronischen Mischers nach einem der Ansprüche 1-9 in einem Entfernungsmeßgerät mit einem ein amplitudenmoduliertes Lichtsignal (51) aussendenden Lichtsender (47, 49), wobei der Lichtsensor (2) das von einem zu vermessenden Objekt zurückreflektierte Lichtsignal (21) erfaßt und ein Phasenvergleicher (59) die Phasenverschiebung zwischen dem ausgesandten Lichtsignal (51) und dem zurückkommenden Lichtsignal (21) erfaßt.

11. Verwendung eines optoelektronischen Mischers in einem Entfernungsmeßgerät nach Anspruch 10, wobei die Referenzfrequenz aus der Signalfrequenz mit einem Frequenzversetzer (61) erzeugt wird.
